# EUROPEAN PATENT APPLICATION

(11) **EP 1 422 952 A1**
(43) Date of publication of application: **26.05.2004**
(21) Application number: 02080602.2
(22) Date of filing: 30.12.2002
(51) Int. Cl.: H04Q 7/22

(54) **A bi-directional messaging system**

(30) Priority: 21.12.2001 IE 20011101
(71) Applicant: Japkinstill Services Ltd., Ballsbridge, Dublin 4 (IE)
(72) Inventor: Congdon, Mark, Dublin 9 (IE); Glennon, Desmond, Sutton, Co. Dublin (IE); Harding, Albert, Howth, Co. Dublin (IE); Harding, Graham, Ashbourne, Co. Meath (IE); Hook, Bobby, Bettystown, Co. Meath (IE); Dunne, Paul, Blackrock, Co. Dublin (IE)
(74) Representative: Lane, Cathal Michael

(57) **Abstract**

A messaging system is disclosed which is adapted to enable multiple users to send a message to one or more recipients using a shared modem and to allow the recipients to reply to that message. An identifier of the sender of the message is embedded in the message. The shared modem uses the identifier included in the reply message to route the reply message to the correct user.

## Description

### Field of the Invention

The invention relates to messaging systems adapted to receive and send messages between a central server and at least one remote user. The invention is particularly directed to a messaging system utilising SMS technology.

### Background to the Invention

Messaging systems are well known in the art and include many variants to a theme. One such example is an e-mail type application where remote users can direct messages to another user using the address of that user. Similarly, in mobile phone applications it is known to utilise SMS messaging to send messages between users. All such systems share common functionality in that the message sent by the sender is initially directed to a service provider which compares the address or identifier on the message to known addresses and then forwards on the message to the address that matches the identifier on the message.

It is also known within the art to utilise cross-platform technologies such as for example where a sender utilises a PC platform to write a SMS type message which is then forwarded by the service provider to an addressee who receives the message as an SMS message. Similarly it is known to receive emails on mobile phone handsets which have been previously directed to an email address of the user of the handset but have been re-directed from the email account of that user to the handset. Such ability to utilise cross platform technologies has many advantages including the ability to compose the message using a conventional keyboard, as opposed to the alphanumeric keys of the phone keypad and the additional storage facility offered by computer type storage components as opposed to the limited memory capabilities of the mobile handset. Additional benefits include the ability to bulk SMS message using large pre-stored address books.

Known systems, such as that utilised by the South African company Mobile Telephone Networks system in their website "www.mtnsms.com" allow a user to log in to a web based server and send a SMS message to one or more users who can then reply to the SMS message. The replied SMS message is sent back to an "inbox" belonging to the originating user on the server. The technology also allows a user to forward copies of the SMS message sent or received to an external email address associated with that user, where they may be stored for future reference.

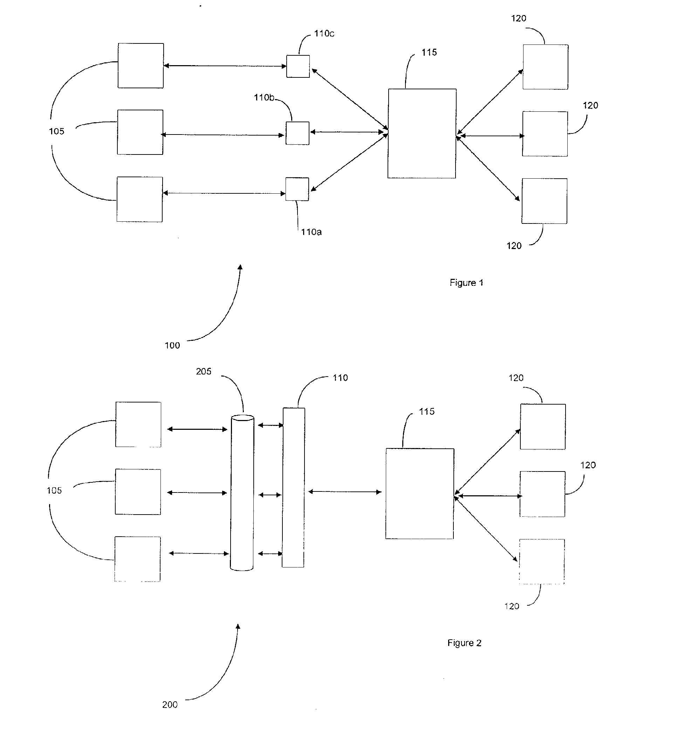

These known systems utilise a direct connection between the website and the messaging centre of the telecommunications company. Although such a direct connection enables the recipient to identify the user who sent the message, it suffers in that a constant direct connection is required. An alternative method is to utilise a messaging system 100 such as that shown in block outline in Figure 1. In this type of known arrangement a plurality of users 105 can compose a message using a PC Interface and send it to one or more recipients 120 over a telecommunications network 115, such as a GSM type network. In order to ensure that each sender can then receive a reply from the recipients it is possible to incorporate individual terminal adapters 110a, 110b, 110c, each adapter being uniquely associated with the individual, so as to facilitate the communication between the PC network and the telecommunications network. The adapters are typically of the GSM type adapters such as the M20 manufactured by Siemens.Using such an architecture allows one to establish connectivity when desired but suffers in that each user of the system requires a uniquely associated adapter to enable bi-directional communication. Due to the nature of the protocols associated with SMS type message if each of the users 105 utilised a shared GSM adapter the recipient would not be able to reply to individual senders, as the identifier associated with the received message is the identifier of the adapter, not that of the originator of the message. In such implementations, it is not possible for a recipient to reply to the message so as to return an answer to the original sender of the message. If one attempts to do so the message is simply returned to the GSM adapter mailbox, and cannot be routed through to the original sender of the message.

There is therefore a need to provide a system and method that will enable multiple users to send a message to one or more recipients using a shared adapter and to allow the recipients to reply to that message.

### Object of the Invention

It is an object of the present invention to provide a messaging system and method that enables a recipient of a SMS message to reply to the sender of that message in applications where one or more senders utilise a shared adapter to send messages.

### Summary of the Invention

Accordingly the present invention provides a system and method that associates an identifier of a sender of an SMS message with that user and uses the identifier to route messages received at a shared adapter to the correct user.

In a first embodiment the present invention provides a messaging system adapted to route an SMS message received at a shared adapter to a defined user of the system, the system comprising:
a datastore having a predefined list of identifiers, each identifier being associated with a user of the system, means for comparing an identifier embedded in the body of the received SMS message with the predefined list of identifiers so as to determine an associated user of the system with the message, and
means for routing the message to the user associated with the identifier.

By establishing a datastore of defined identifiers the present invention enables messages which are intended for different recipients to be sent to a shared adapter where they are sorted and routed to the correct recipient. This allows for a multiplicity of users to utilise the same adapter without losing the functionality that they would have if they each had their unique adapter.

The adapter is desirably a GSM type adapter, adapted to enable mobile telecommunication between the messaging system and a telecommunications provider.

The means for routing the message to the user desirably initially converts the SMS message to a PC format and routes the converted message to a PC mailbox of the user associated with the message.

The system may be further adapted to forward the received SMS message to a mobile phone number associated with the user associated with the received message.

The system may be further adapted to effect a routing of messages received at the adapter and not having an identifier embedded therein which matches the predefined list of identifiers to a central mailbox where they may be examined.

The invention also provides in another embodiment, a messaging system adapted to enable at least two users to send and receive SMS messages from a plurality of recipients using a shared adapter, the system comprising a messaging system for receiving messages as detailed above and
means for enabling a user to compose a message
means for converting the composed message to SMS format
means for embedding in the messages an identifier associated with the composer of the message, and wherein a composed message, once formatted in SMS format is routed to the detailed recipients by the shared adapter.

The system may be further adapted to include:
a plurality of adapters, individual adapters being associated with different telecommunication networks,
determining means for determining which adapter is best suited for sending message to detailed recipients, and wherein once determined, the message is sent to the recipients using the best suited adapter.

The determination is typically effected by examining the telecommunication number associated with each of the recipients, identifying the network associated with that number and using an adapter for that network to send that message.

By employing a plurality of adapters the present invention enables different networks to be utilised for different message types.

The system may also include a second datastore adapted to store a plurality of contact details for recipients of messages, the second datastore being accessible by a user of the system so as to determine the correct address for a message recipient.

The invention also provides a method of using a shared GSM adapter to send and receive messages, the method comprising the steps of:
sending a composed message to detailed recipients of the message, the message being sent to the recipients using a GSM adapter,
receiving a reply from at least one recipient of the message,
comparing an embedded identifier within the reply with a list of stored identifiers, the stored identifiers being associated with one or more users, and
on effecting a match between the embedded identifier and the stored identifiers forwarding the message to the user associated with the stored identifier.

The message is desirably composed using a computer interface, and is then converted to a SMS type message prior to being sent to the detailed recipient.

These and other features of the present invention will be better understood with reference to the following drawings.

### Brief Description of the Drawings

Figure 1 shows a messaging system according to the prior art,
Figure 2 shows in schematic form a messaging system according to the present invention,
Figure 2b shows in a more detail schematic, the messaging system of Figure 2,
Figure 3 shows a flow chart sequence associated with a process flow according to the present invention,
Figure 4 shows some process steps associated with the routing of messages according to the present invention,
Figure 5 shows a flow chart identifying the steps conducted by a user in order to send a message in accordance with an embodiment of the present invention,
Figure 6 outlines steps conducted by the system of the present invention so as to send a message composed by a user of the system, and
Figure 7 shows a modification to the process of Figure 6 where multiple adapters are available and the system is adapted to choose the best adapter for the specific message.

### Detailed Description of the Drawings

Figure 1 has been described with reference to the prior art.

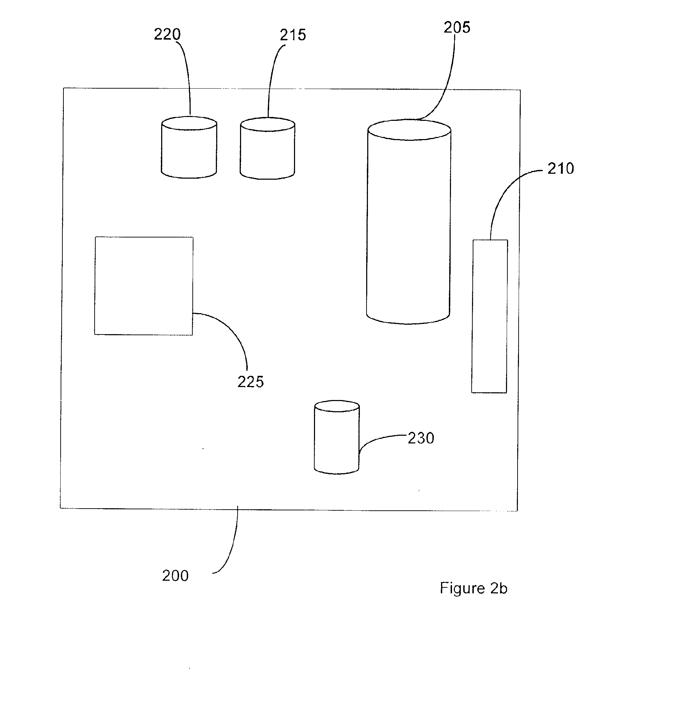

Figure 2 shows a messaging system 200 according to the present invention. The same reference numerals will be used for components of the system that have been previously described. The system is adapted to route an SMS message received at a shared adapter 110 to a defined user 105 of the system. The system includes a datastore 205 having a predefined list of identifiers, each identifier being associated with a user of the system. The datastore is provided between the adapter 110 and the users 105. Messages received at the adapter 110 are examined so as to ascertain whether an identifier is located within the body of the message. This identifier is compared against a predefined list of identifiers so as to determine an associated user of the system with the message, and once determined the message is routed to the user associated with the identifier.

Figure 2b shows in more detail, yet still in schematic form, the system of the present invention. This schematic is intended to illustrate exemplary components of the system and it will be appreciated by those skilled in the art that no inference as to the essential nature or otherwise of components illustrated in this schematic should be inferred. The same reference numerals will be used for similar components. The system 200 comprises means 210 for receiving messages from the adapter 110 and comparing the received message against the datastore 205 so as to ascertain a suitable user within the system to route the message to. Two additional datastores, an incoming message centre 215 and an outgoing message centre 220 are also provided, these centres providing a storage area for messages that have not yet been collected by the designated user or have not been routed to the adapter. An interface 225 to the system is also provided, the interface allowing one or more users to access the message centres so as to send or receive messages for that user. A fourth datastore 230 may be also provided, this datastore adapted to store contact details for one or more persons to whom messages are sent.

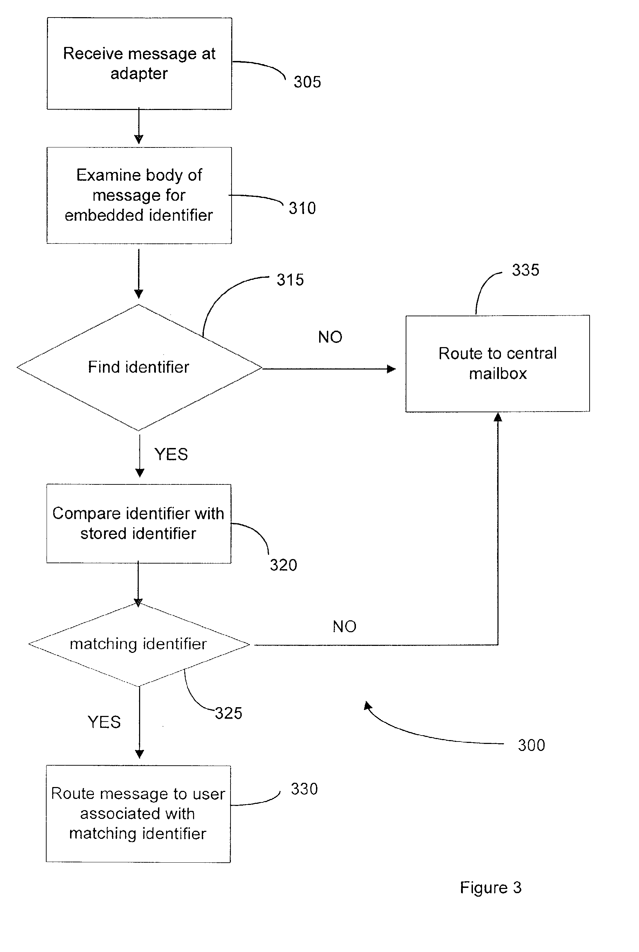

Figure 3 shows a process flow chart identifying some process steps (300) that are used to implement the method of the present invention. A message is received at the adapter (Step 305). The message body is searched to ascertain whether any identifier is provided therein (Steps 310, 315). If an identifier is found then that identifier is compared with the pre-stored identifiers in the datastore to ascertain whether the identifier in the message matches any of the pre-stored identifiers (Steps 320, 325). If a matching identifier is found then the message is routed to the user of the system that is associated with that identifier (Step 330). If either an identifier is not found in the body of the message or the found identifier does not match any pre-stored identifiers then the message is routed through to a central post box where it may be retrieved at a later date (Step 335).

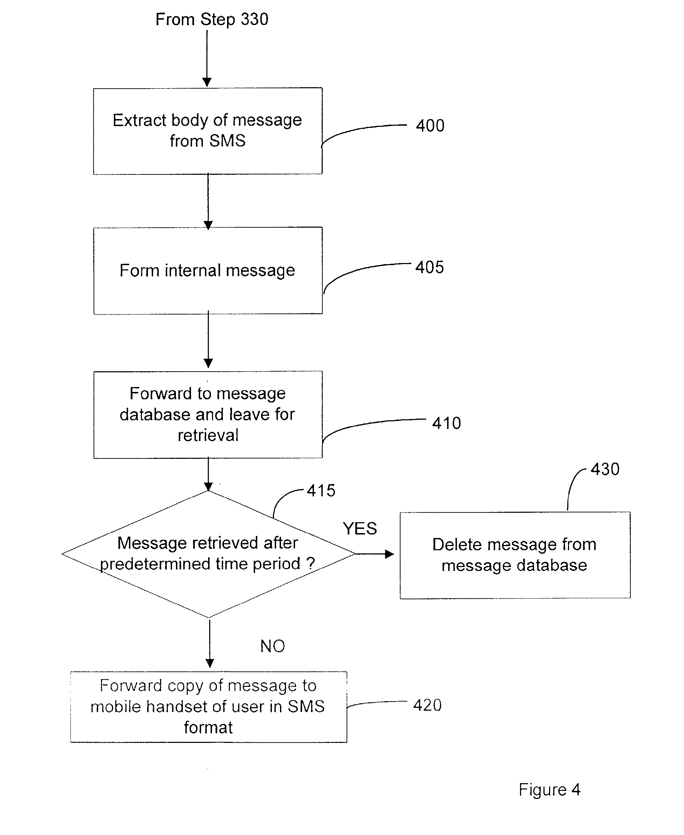

Figure 4 shows some additional process steps associated with the routing of a message. After the message has been associated with a user of the system, the body of the message is extracted from the SMS (Step 400). This extracted text is then used to form a message in an internal PC type format (Step 405) which is then routed to a message centre or message datastore for the system (Step 410). The message centre is a central repository for the system which allows for a storing of messages prior to retrieval by the individual user. Typically, this will be checked periodically by the user, and once the user detects that there is a message waiting on the repository for that user the message is retrieved and may be stored locally by the user. The system is desirably adapted to detect the time period that a message stays un-retrieved on the message centre and if the message stays too long (Step 415), a copy of the message is sent using SMS technology to the mobile handset of the user to whom the message was directed (Step 420). If the message is retrieved from the repository, the message is deleted (Step 430).

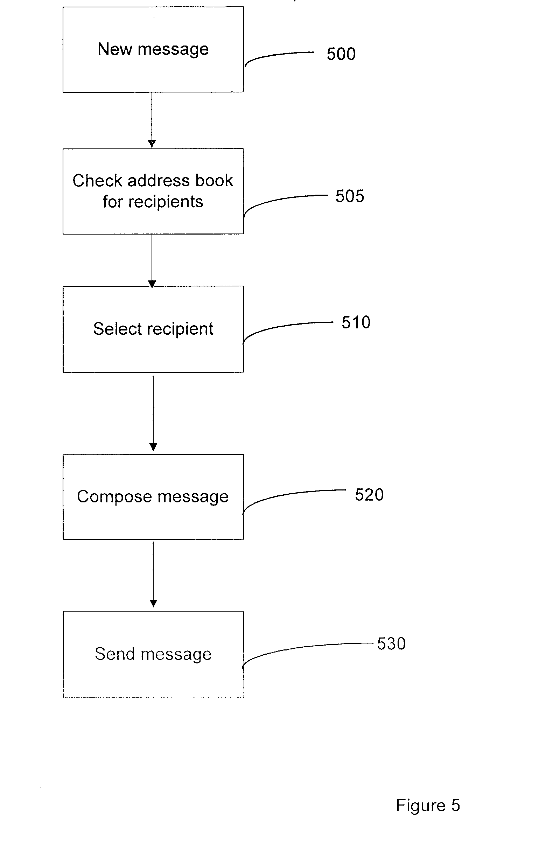

Figure 5 shows a process flow associated with a user sending a message to one or more recipients according to the present invention. On deciding to send a new message (Step 500), the user selects an address book which has been previously populated with known contacts (Step 505). On selecting the address book, the user can select on or more contacts from that book (Step 510). Alternatively, and not shown, it will be appreciated that the user can choose to select a new contact- one which has not been previously stored- and update the address book or simply insert the contact details for that person. Once the recipients have been identified, a message can be composed (Step 520). It will be appreciated that due to the limitations of SMS type messages that such messages are limited in character length to approximately 150 characters. The message is then sent to the outgoing message centre (Step 530). It will be appreciated by those skilled in the art that although the steps have been detailed in sequential order, that such sequence is not essential and may be altered in certain applications.

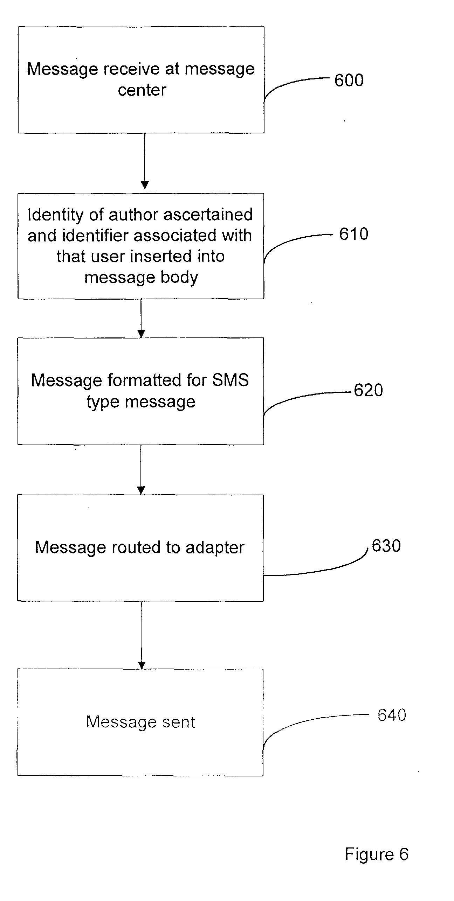

Figure 6 details the steps conducted by the system of the present invention in order to send out a message on behalf of a user. The composed message from Figure 5 is received at a message centre (Step 600). The identity of the sender is checked and an identifier associated with that sender is inserted into the body of the message (Step 610). The message is then checked to confirm that it is in a suitable format for sending as an SMS message (Step 620). The message is then routed to an adapter (Step 630), from which it is sent to an external telecommunications network for distribution to the detailed recipients (Step 640).

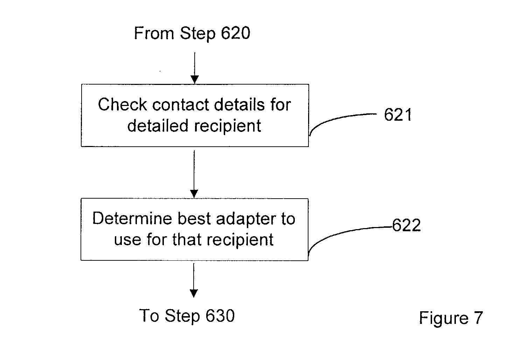

Figure 7 shows a modification to the steps outlined in Figure 6 which may be utilised in situations where there are multiple available adapters for sending out messages from the system of the present invention. Such multiple adapters may be incorporated for a number of reasons such as for example in situations where the volume of messages being sent from the system is too great for a single adapter or in circumstances where discounts are available from one network or another, and the system is adapted to utilise a network that offers the best pricing offer at any one time. The steps outlined in Figure 7 desirably are conducted between Steps 620 and 630 of Figure 6. Once the message has been formatted for SMS messaging, the recipient contact details are checked (Step 621). The best available adapter for that message is then determined (Step 622) and the message is then routed to that adapter (Step 630).

The present invention is typically suitable for applications where a plurality of messages are sent to a multiplicity of users and replies from these messages are required. Such applications include but are not limited to marketing campaigns, customer profiles and contacting databases.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. A messaging system adapted to route an SMS message received at a shared adapter to a defined user of the system, the system comprising:
a) a datastore having a predefined list of identifiers, each identifier being associated with a user of the system,
b) means for comparing an identifier embedded in the body of the received SMS message with the predefined list of identifiers so as to determine an associated user of the system with the message, and
c) means for routing the message to the user associated with the identifier.

2. The system as claimed in claim 1 wherein the adapter is a GSM type adapter, and is adapted to enable mobile telecommunication between the messaging system and a telecommunications provider.

3. The system as claimed in claim 1 or claim 2 wherein the means for routing the message to the user initially converts the SMS message to a PC format and routes the converted message to a PC mailbox of the user associated with the message.

4. The system as claimed in any preceding claim further comprising means to forward the received SMS message to a mobile phone number associated with the user associated with the received message.

5. The system as claimed in any preceding claim further comprising means to effect a routing of messages received at the adapter and not having an identifier embedded therein which matches the predefined list of identifiers to a central mailbox where they may be examined.

6. A messaging system adapted to enable at least two users to send and receive SMS messages from a plurality of recipients using a shared adapter, the system comprising a messaging system for receiving messages as claimed in any one of claims 1 to 5 and:
a) means for enabling a user to compose a message
b) means for converting the composed message to SMS format
c) means for embedding in the messages an identifier associated with the composer of the message, and
wherein a composed message, once formatted in SMS format is routed to the detailed recipients by the shared adapter.

7. The system as claimed in claim 6 further adapted to include:
a) a plurality of adapters, individual adapters being associated with different telecommunication networks,
b) determining means for determining which adapter is best suited for sending the message to detailed recipients, and
wherein once determined, the message is sent to the recipients using the best suited adapter.

8. The system as claimed in claim 7 wherein the determination is effected by examining the telecommunication number associated with each of the recipients, identifying the network associated with that number and using an adapter for that network to send that message.

9. The system as claimed in claim 7 or claim 8 further including a second datastore adapted to store a plurality of contact details for recipients of messages, the second datastore being accessible by a user of the system so as to determine the correct address for a message recipient.

10. A method of using a shared adapter to send and receive messages, the method comprising the steps of:
a) sending a composed message to detailed recipients of the message, the message being sent to the recipients using the adapter,
b) receiving a reply from at least one recipient of the message,
c) comparing an embedded identifier within the reply with a list of stored identifiers, the stored identifiers being associated with one or more users, and
d) on effecting a match between the embedded identifier and the stored identifiers forwarding the message to the user associated with the stored identifier.

11. The method as claimed in claim 10 wherein the message is composed using a computer interface, and is then converted to a SMS type message prior to being sent to the detailed recipient.

12. The method as claimed in claim 10 or claim 11 wherein the embedded identifier is embedded in the original message sent by the user to the recipient, and is maintained in the reply by the recipient.

13. The method as claimed in claim 10 or 11 wherein the embedded identifier is embedded in the returned message by the recipient prior to the recipient forwarding the message to the user.

14. The method as claimed in any one of claims 10 to 13 wherein the message is an SMS message.
